# EUROPEAN PATENT SPECIFICATION

(11) **EP 2 963 094 B1**
(45) Date of publication and mention of the grant of the patent: **23.06.2021**
(21) Application number: 14757328.1
(22) Date of filing: 20.01.2014
(51) Int. Cl.: H01F 1/26, B32B 7/12, B32B 27/08, B32B 27/20, B32B 27/30, B32B 27/38, B32B 27/42, C08K 3/34, C08L 33/06, C09J 7/35, C08L 63/00, C09J 11/04, C09J 133/00, C09J 161/06, C09J 161/34, C09J 163/00, G06F 3/046, H01F 41/16

(54) **SOFT MAGNETIC THERMOSETTING ADHESIVE FILM, SOFT MAGNETIC FILM-LAMINATED CIRCUIT BOARD, AND POSITION-DETECTING DEVICE**
WEICHMAGNETISCHE WÄRMEHÄRTENDE HAFTFOLIE, WEICHMAGNETISCHE FOLIENLAMINIERTE LEITERPLATTE UND POSITIONSERKENNUNGSVORRICHTUNG
FILM MAGNÉTIQUE DOUX ADHÉSIF THERMODURCISSABLE, CIRCUIT IMPRIMÉ STRATIFIÉ SUR UN FILM MAGNÉTIQUE DOUX ET DÉTECTEUR DE POSITION

(30) Priority: 26.02.2013 JP 2013035700
(43) Date of publication of application: 06.01.2016
(73) Proprietor: Nitto Denko Corporation, Ibaraki-shi, Osaka 567-8680 (JP)
(72) Inventor: HABU, Takashi, Ibaraki-shi Osaka 567-8680 (JP); EBE, Hirofumi, Ibaraki-shi Osaka 567-8680 (JP)
(74) Representative: Hoffmann Eitle
(86) International application number: PCT/JP2014/050999
(87) International publication number: WO 2014/132701

(56) References cited:
- JP-A- 2002 201 447
- JP-A- 2008 134 837
- JP-A- 2009 059 753
- JP-A- 2009 059 753
- JP-A- 2012 212 790
- US-A1- 2008 164 077
- US-A1- 2009 110 587
- US-A1- 2010 001 226
- US-A1- 2010 047 968

## Description

### TECHNICAL FIELD

The present invention relates to a soft magnetic thermosetting adhesive film, a soft magnetic film laminate circuit board, and a position detection device.

### BACKGROUND ART

A position detection device having a pen-type position indicator for detecting a position by moving the pen on a position detection plane is called a digitizer, and is widely spread as an input device for computers. The position detection device includes a position detection flat plate, and a circuit board (sensor board) disposed therebelow and having loop coils formed on the surface of the board. Then, the position of the position indicator is detected by using electromagnetic induction generated by the position indicator and loop coils.

Patent Document 1 has proposed, for example, a method in which a soft magnetic film containing a soft magnetic material is disposed at a face (opposite face) opposite to the face of the position detection plane of the sensor board in a position detection device for efficient communication by controlling the magnetic flux generated at the time of electromagnetic induction.

Patent Document 1 discloses a magnetic film containing a soft magnetic powder, a binder resin composed of, for example, acrylic rubber, phenol resin, epoxy resin, and melamine, and a metal salt of phosphinic acid. The soft magnetic film has a high content of, for example, a metal salt of phosphinic acid and melamine, and therefore fire-retardancy is given to the circuit board without affecting reliability of an electronic device
Patent Document 2 discloses a soft magnetic film with acrylic rubber, epoxy, phenol, thermosetting agent, and a high percentage of thermosetting resin.

### Citation List

### Patent Document

Patent Document 1 Japanese Unexamined Patent Publication No. 2012-212790
Patent Document 2: JP 2012 212790 A

### SUMMARY OF THE INVENTION

### PROBLEM TO BE SOLVED BY THE INVENTION

In a sensor board, a double-sided circuit board having wire patterns such as loop coils on both sides thereof is sometimes used for a thinner size.

In producing such a sensor board, for example, bonding of a soft magnetic film to the opposite face of the double-sided circuit board with an adhesive tape involves generally manual operation of bonding, which causes inaccurate positioning at the time of bonding, decreasing working efficiency.

Meanwhile, when a soft magnetic film is directly bonded to the sensor board, in a sheet having high contents of metal salt of phosphinic acid and melamine for addition of fire-retardancy as described in Patent Document 1, a gap is caused at the time of bonding by failing to fill the gaps between the wires with the magnetic film.

Thus, a reflowing process is performed with the circuit board having a soft magnetic film laminated for mounting electronic components, and therefore a high temperature due to the reflowing process causes voids originated from the gaps, and as a result, unevenness may be caused on the surface of the soft magnetic film, and the soft magnetic film may be separated from the circuit board. Therefore, magnetic properties of the soft magnetic film may not be exhibited sufficiently, and appearance may be poor.

Furthermore, the soft magnetic film is generally produced by applying a liquid composition for forming a soft magnetic film onto a substrate and then drying. However, the liquid composition contains soft magnetic particles that are heavy, and the soft magnetic particles precipitate in the composition, and therefore cannot be applied stably, and may fail to form a film (sheet) (that is, film-forming is not achieved).

An object of the present invention is to provide a soft magnetic thermosetting adhesive film in which soft magnetic particles can be embedded between the wires of the wire pattern formed on the circuit board surface at the time of bonding onto the surface of the circuit board, and which has excellent reflow resistance and film-forming properties; a soft magnetic film laminate circuit board in which the soft magnetic thermosetting adhesive film is used; and a position detection device.

### MEANS FOR SOLVING THE PROBLEM

A soft magnetic thermosetting adhesive film of the present invention is specified in claim 1 and is a soft magnetic thermosetting adhesive film formed from a soft magnetic thermosetting composition containing soft magnetic particles, acrylic resin, epoxy resin, phenol resin, and a thermosetting catalyst, wherein a total of the epoxy resin content and the phenol resin content is 20 parts by mass or more and 99 parts by mass or less relative to 100 parts by mass of a soft magnetic particles-excluding component excluding the soft magnetic particles from the soft magnetic thermosetting composition.

It is preferable that the soft magnetic thermosetting adhesive film of the present invention is in a semi-cured state.

It is preferable that in the soft magnetic thermosetting adhesive film of the present invention, 30 parts by volume or more and 70 parts by volume or less of the soft magnetic particles is contained relative to 100 parts by volume of the soft magnetic thermosetting adhesive film.

It is preferable that in the soft magnetic thermosetting adhesive film of the present invention, 0.2 parts by mass or more and 1 part by mass or less of the thermosetting catalyst is contained relative to 100 parts by mass of a resin component consisting of the acrylic resin, the epoxy resin, and the phenol resin.

A soft magnetic film laminate circuit board of the present invention is specified in claim 5 and is produced by laminating the soft magnetic thermosetting adhesive film on a circuit board, and curing the soft magnetic thermosetting adhesive film by heat.

A position detection device of the present invention as specified in claim 6, includes the soft magnetic film laminate circuit board.

### EFFECT OF THE INVENTION

The soft magnetic thermosetting adhesive film of the present invention is capable of reliably embedding the soft magnetic particles in gaps between the wires of the wire pattern when bonding onto the surface of the circuit board. Furthermore, the soft magnetic thermosetting adhesive film can be formed into a sheet easily from a composition for forming the soft magnetic thermosetting adhesive film, and therefore have excellent film-forming properties.

The soft magnetic film laminate circuit board of the present invention can suppress separation of the soft magnetic film from the circuit board at the time of reflow processing, and can suppress generation of uneven surface on the soft magnetic film. Therefore, the soft magnetic film is reliably adhered to the circuit board.

In the position detection device of the present invention, the soft magnetic film is reliably adhered to the circuit board. Therefore, the position detection device of the present invention has heat resistance even after reflowing, and thus without deterioration of magnetic properties, reliable position detection can be performed.

### BRIEF DESCRIPTION OF THE DRAWINGS

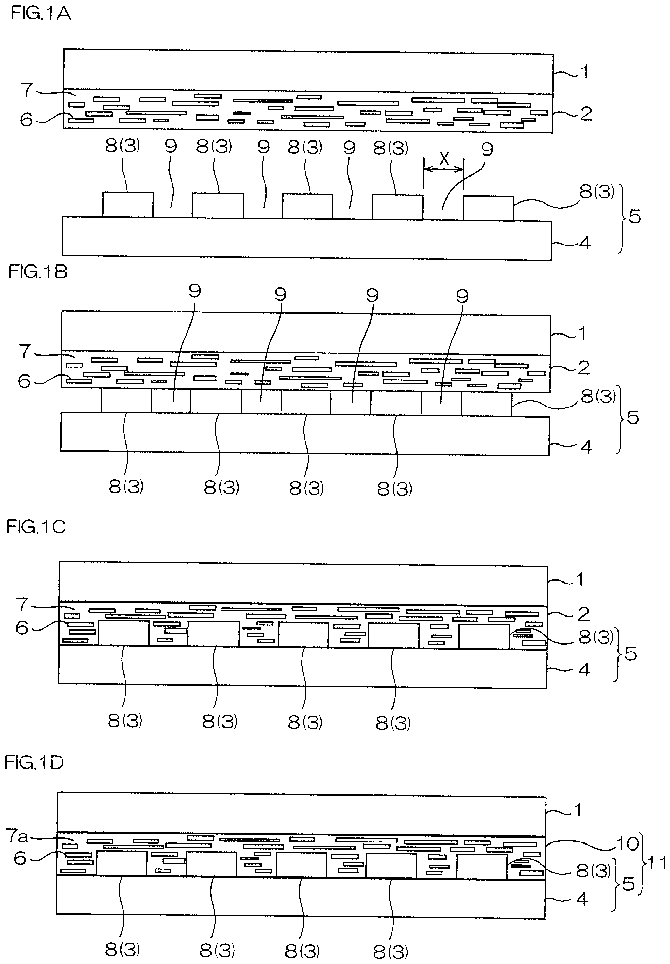

FIG. 1 shows production process drawings of an embodiment of a method for producing a soft magnetic film laminate circuit board of the present invention: FIG. 1A illustrating a step of preparing a soft magnetic thermosetting adhesive film and a circuit board; FIG. 1B illustrating a step of allowing the soft magnetic thermosetting adhesive film to adhere to the circuit board; FIG. 1C illustrating a step of bringing the soft magnetic thermosetting adhesive film into contact with the circuit board; and FIG. 1D illustrating a step of heating the soft magnetic thermosetting adhesive film on the circuit board.

### DESCRIPTION OF EMBODIMENTS

The soft magnetic thermosetting adhesive film of the present invention is formed from a soft magnetic thermosetting composition containing soft magnetic particles, acrylic resin, epoxy resin, phenol resin, and a thermosetting catalyst.

Examples of the soft magnetic materials that form the soft magnetic particles include magnetic stainless steel (Fe-Cr-Al-Si alloy), Sendust (Fe-Si-Al alloy), permalloy (Fe-Ni alloy), silicon copper (Fe-Cu-Si alloy), Fe-Si alloy, Fe-Si-B (-Cu-Nb) alloy, Fe-Si-Cr-Ni alloy, Fe-Si-Cr alloy, Fe-Si-Al-Ni-Cr alloy, and ferrite. Among these, in view of magnetic properties, preferably, Sendust (Fe-Si-Al alloy) is used.

Among these, more preferably, an Fe-Si-Al alloy having a Si content of 9 to 15 mass% is used. In this manner, a real part of the magnetic permeability of the soft magnetic sheet can be increased.

The soft magnetic particles are preferably shaped flat (plate). The aspect ratio is, for example, 8 or more, preferably 15 or more, and for example, 80 or less, preferably 65 or less. The aspect ratio is calculated as an aspect ratio dividing the 50% particle size (D50) by an average thickness of the soft magnetic particles.

The soft magnetic particles have an average particle size (average length) of, for example, 3.5 µm or more, preferably 10 µm or more, and for example, 100 µm or less. The average thickness is, for example, 0.3 µm or more, preferably 0.5 µm or more, and for example, 3 µm or less, preferably 2.5 µm or less. By adjusting the aspect ratio, average particle size, and average thickness of the soft magnetic particles, demagnetization effects of the soft magnetic particles can be reduced, and as a result, magnetic permeability of the soft magnetic particles can be increased. To equalize the size of the soft magnetic particles, as necessary, those soft magnetic particles classified with, for example, a sieve can be used.

The surface of the soft magnetic particles may be subjected to a coupling treatment with a coupling agent. Use of the soft magnetic particles subjected to the coupling treatment reinforces the interface between the soft magnetic particles and the resin component, and therefore the soft magnetic thermosetting resin film can be filled with the soft magnetic particles at a high ratio.

Examples of the coupling agent include silane coupling agents such as γ-methacryloxy propyltrimetoxysilane, γ-glycidoxypropyltrimetoxysilane, and γ-glycidoxypropylmethylethoxysilane.

When the soft magnetic thermosetting adhesive film contains the soft magnetic particles subjected to the coupling treatment, the soft magnetic particles subjected to the coupling treatment in advance can be used as a material, or the soft magnetic thermosetting composition and the coupling agent can be mixed for the coupling treatment when producing the soft magnetic thermosetting adhesive film.

The soft magnetic particles content in the soft magnetic thermosetting composition (and in the soft magnetic thermosetting adhesive film and soft magnetic film) is, for example, 80 mass% or more, preferably 85 mass% or more, and for example, 95 mass% or less, preferably 92 mass% or less. By setting the soft magnetic particles content in the range of the above-described upper limit or less, excellent film-forming properties into soft magnetic thermosetting adhesive films can be achieved. Meanwhile, by setting the soft magnetic particles content in the range of above-described lower limit or more, the soft magnetic thermosetting adhesive film having excellent magnetic properties can be achieved.

The soft magnetic thermosetting composition contains a resin component composed of acrylic resin, epoxy resin, and phenol resin.

Examples of the acrylic resin include an acrylic-type polymer produced by polymerizing a monomer component of one, or two or more of straight chain or branched alkyl (meth) acrylate ester having an alkyl group. "(Meth) acrylic" represents "acrylic and/or meth acrylic".

Examples of the alkyl group include an alkyl group having 1 to 20 carbon atoms such as a methyl group, an ethyl group, a propyl group, an isopropyl group, a n-butyl group, a t-butyl group, an isobutyl group, an amyl group, an isoamyl group, a hexyl group, a heptyl group, a cyclohexyl group, a 2-ethylhexyl group, an octyl group, an isooctyl group, a nonyl group, an isononyl group, a decyl group, an isodecyl group, an undecyl group, a lauryl group, a tridecyl group, a tetradecyl group, a stearyl group, an octadecyl group, and a dodecyl group. Preferably, an alkyl group having 1 to 6 carbon atoms is used.

The acrylic-type polymer can be a copolymer of the alkyl (meth)acrylate ester and an additional monomer.

Examples of another monomer include glycidyl group-containing monomers such as glycidylacrylate and glycidylmethacrylate; carboxyl group-containing monomers such as acrylic acid, methacrylic acid, carboxyethyl acrylate, carboxypentyl acrylate, itaconic acid, maleic acid, fumaric acid, and crotonic acid; acid anhydride monomers such as maleic anhydride and itaconic anhydride; hydroxyl group-containing monomers such as 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl)-methylacrylate; sulfonic acid group-containing monomers such as styrenesulfonic acid, allylsulfonic acid, 2-(meth) acrylamide-2-methylpropane sulfonic acid, (meth) acrylamidepropane sulfonic acid, sulfopropyl (meth) acrylate, and (meth) acryloyloxynaphthalenesulfonic acid; phosphoric acid group-containing monomers such as 2-hydroxyethylacryloyl phosphate; and styrene monomer, and acrylonitrile.

Among these, preferably, a glycidyl group-containing monomer, carboxyl group-containing monomer, or hydroxyl group-containing monomer is used. When the acrylic resin is a copolymer of alkyl (meth)acrylate ester and an additional monomer of these, that is, when the acrylic resin has a glycidyl group, carboxyl group, or hydroxyl group, reflow resistance of the soft magnetic film produced by curing the soft magnetic thermosetting adhesive film by heat is more excellent.

The mixing ratio of another monomer (mass) is, when a copolymer of the alkyl (meth)acrylate ester and another monomer is used, preferably 40 mass% or less relative to the copolymer.

The acrylic resin has a weight-average molecular weight of, for example, 1 × 10⁵ or more, preferably 3 × 10⁵ or more, and for example, 1 × 10⁶ or less. By setting the mixing ratio of another monomer (mass) in this range, a soft magnetic thermosetting adhesive film with excellent adhesiveness and reflow resistance can be achieved. The weight-average molecular weight is measured by gel permeation chromatography (GPC) based on a polystyrene standard calibration value.

The acrylic resin has a glass transition temperature (Tg) of, for example, -30°C or more, preferably -20°C or more, and for example, 30°C or less, preferably 15°C or less. When the glass transition temperature (Tg) is the above-described lower limit or more, adhesiveness of the soft magnetic thermosetting adhesive film is excellent. Meanwhile, when the glass transition temperature (Tg) is the above-described upper limit or less, handleability of the soft magnetic thermosetting adhesive film is excellent. The glass transition temperature is determined based on the maximum value of the loss tangent (tanδ) measured by using a dynamic viscoelasticity measuring apparatus (DMA, frequency 1Hz, temperature increase rate 10°C/min).

The acrylic resin content relative to 100 parts by mass of the resin component (that is, a component composed of acrylic resin, epoxy resin, and phenol resin, and further another resin (described later) blended as necessary) is, for example, 10 parts by mass or more, preferably 20 parts by mass or more, more preferably 40 parts by mass or more, and for example, 80 parts by mass or less, preferably 70 parts by mass or less. By setting the acrylic resin content in such a range, the soft magnetic thermosetting adhesive film with excellent film-forming properties and adhesiveness can be achieved.

The epoxy resin is not particularly limited as long as it is generally used as an adhesive composition, and for example, bifunctional epoxy resins and multifunctional epoxy resins such as bisphenol epoxy resin (particularly, bisphenol A epoxy resin, bisphenol F epoxy resin, bisphenol S epoxy resin, brominated bisphenol A epoxy resin, hydrogenated bisphenol A epoxy resin, bisphenol AF epoxy resin, etc.), phenol epoxy resin (particularly, phenol novolak epoxy resin, orthocresol novolak epoxy resin, etc.), biphenyl epoxy resin, naphthalene epoxy resin, fluorine epoxy resin, trishydroxyphenylmethane epoxy resin, and tetraphenylolethane epoxy resin are used. Furthermore, for example, hydantoin epoxy resin, trisglycidylisocyanurate epoxy resin, and glycidylamine epoxy resin are also used. These can be used singly or in combination of two or more.

Of these epoxy resins, preferably, bisphenol epoxy resin, novolak epoxy resin, orthocresol novolak epoxy resin, biphenyl epoxy resin, trishydroxyphenylmethane resin, and tetraphenylolethane epoxy resin are used, and more preferably, bisphenol epoxy resin is used. Containing such epoxy resins allows for excellent reactivity with phenol resin, and as a result, the soft magnetic film has excellent reflow resistance.

Phenol resin is a curing agent for epoxy resin, and novolak-type phenol resins such as phenol novolak resin, phenol aralkyl resin, cresol novolak resin, tert-butyl phenol novolak resin, and nonylphenol novolak resin; resole-type phenol resin; and polyoxystyrene such as polyparaoxystyrene are used. These can be used singly, or can be used in combination of two or more. Of these phenol resins, preferably novolak-type resin, more preferably phenol novolak resin and phenol aralkyl resin, even more preferably phenol aralkyl resin is used. Containing these phenol resins allows for improvement in connection reliability of the soft magnetic film laminate circuit board.

When the phenol equivalent of the phenol resin relative to 100g/eq of the epoxy equivalent of the epoxy resin is 1 g/eq or more and less than 100g/eq, the epoxy resin content relative to 100 parts by mass of the resin component is, for example, 15 parts by mass or more, preferably 35 parts by mass or more, and for example, 70 parts by mass or less, and the phenol resin content relative to 100 parts by mass of the resin component is, for example, 5 parts by mass or more, preferably 15 parts by mass or more, and for example, 30 parts by mass or less.

When the hydroxyl equivalent of the phenol resin relative to 100g/eq of the epoxy equivalent of the epoxy resin is 100g/eq or more and less than 200g/eq, the epoxy resin content relative to 100 parts by mass of the resin component is, for example, 10 parts by mass or more, preferably 25 parts by mass or more, and for example, 50 parts by mass or less; and the phenol resin content relative to 100 parts by mass of the resin component is, for example, 10 parts by mass or more, preferably 25 parts by mass or more, and for example, 50 parts by mass or less.

When the phenol equivalent of the phenol resin relative to 100g/eq of the epoxy equivalent of the epoxy resin is 200g/eq or more and 1000g/eq or less, the epoxy resin content relative to 100 parts by mass of the resin component is, for example, 5 parts by mass or more, preferably 15 parts by mass or more, and for example, 30 parts by mass or less, and the phenol resin content relative to 100 parts by mass of the resin component is, for example, 15 parts by mass or more, preferably 35 parts by mass or more, and for example, 70 parts by mass or less.

The epoxy equivalent when two types of epoxy resins are used in combination is, an epoxy equivalent of all epoxy resins in total calculated by multiplying the epoxy equivalent of each epoxy resin by the mass ratio of each epoxy resin relative to the total amount of the epoxy resin, and adding up these.

The hydroxyl equivalent in the phenol resin per 1 equivalent of the epoxy group of the epoxy resin is, for example, 0.2 equivalent or more, preferably 0.5 equivalent or more, and for example, 2.0 equivalent or less, preferably 1.2 equivalent or less. When the amount of the hydroxyl group is in the above-described range, curing reaction of the soft magnetic thermosetting adhesive film is excellent, and deterioration can be suppressed.

The resin component content of the soft magnetic thermosetting composition is, for example, 5 mass% or more, preferably 10 mass% or more, and for example, 20 mass% or less, preferably 15 mass% or less. By setting the resin component content in the range of the above-described upper limit or less, the soft magnetic thermosetting adhesive film having excellent film-forming properties can be achieved. Meanwhile, by setting the resin component content in the range of the above-described lower limit or more, the soft magnetic thermosetting adhesive film having excellent magnetic properties can be achieved.

Particularly, a total of the epoxy resin content and the phenol resin content relative to 100 parts by mass of the soft magnetic particles-excluding component, which is a composition excluding the soft magnetic particles from the soft magnetic thermosetting composition, is, 20 parts by mass or more, preferably 30 parts by mass or more, more preferably 40 parts by mass or more, and 99 parts by mass or less, preferably 90 parts by mass or less, more preferably 80 parts by mass or less, even more preferably 60 parts by mass or less.

When the total content is less than the above-described range, the modulus of elasticity at the time of bonding is high, and therefore embedment of the soft magnetic film between the wires of the circuit board is inferior. Meanwhile, when the total content is more than the above-described range, the acrylic resin content is small, which excessively reduces viscosity. Thus, the soft magnetic particles precipitate at the time of application, and film-forming properties are reduced.

The soft magnetic particles-excluding component is a component consisting of the resin component, the thermosetting catalyst, and the additive (described later) added as necessary, and to be more specific, does not include the soft magnetic particles and solvent.

The resin component can contain an additional resin other than the acrylic resin, epoxy resin, and phenol resin. Such a resin includes, for example, a thermoplastic resin and a thermosetting resin. These resins can be used singly, or can be used in combination of two or more.

Examples of the thermoplastic resin include natural rubber, butyl rubber, isoprene rubber, chloroprene rubber, an ethylene-vinyl acetate copolymer, a copolymer, polybutadiene resin, polycarbonate resin, thermoplastic polyimide resin, polyamide resin (6-nylon, 6,6-nylon, etc.), phenoxy resin, saturated polyester resin (PET, PBT, etc.), polyamide-imide resin, and fluorine resin.

Examples of the thermosetting resin include amino resin, unsaturated polyester resin, polyurethane resin, silicone resin, and thermosetting polyimide resin.

The another resin content of the resin component is, for example, 10 parts by mass or less, preferably 5 parts by mass or less.

The thermosetting catalyst is not limited as long as the catalyst accelerates curing of the resin component by heating, and examples thereof include a salt having an imidazole skeleton, a salt having a triphenylphosphine structure, a salt having a triphenylborane structure, and an amino group-containing compound.

Examples of the salt having an imidazole skeleton include 2-phenylimidazole (trade name; 2PZ), 2-ethyl-4-methylimidazole (trade name; 2E4MZ), 2-methylimidazole (trade name; 2MZ), 2-undecylimidazole (trade name; C11Z), 2-phenyl-4,5-dihydroxymethylimidazole (trade name; 2-PHZ), 2,4-diamino-6-(2'-methylimidazolyl (1)') ethyl-s-triazine isocyanuric acid adduct (trade name;2MAOK-PW) (the above-described products are all manufactured by Shikoku Chemicals Corporation).

Examples of the salt having a triphenylphosphine structure include triorganophosphine such as triphenylphosphine, tributyl phosphine, tri (p-methylphenyl) phosphine, tri (nonylphenyl) phosphine, and diphenyltolyl phosphine; tetraphenylphosphonium bromide (trade name; TPP-PB), methyltriphenylphosphonium (trade name; TPP-MB), methyltriphenylphosphonium chloride (trade name; TPP-MC), methoxymethyltriphenylphosphonium (trade name; TPP-MOC), benzyltriphenylphosphonium chloride (trade name; TPP-ZC), methyltriphenylphosphonium (trade name; TPP-MB) (the above-described products are all manufactured by HOKKO CHEMICAL INDUSTRY CO., LTD.).

Examples of the salt having a triphenylborane structure include tri (p-methylphenyl) phosphine. The salt having a triphenyl borane structure further include those having a triphenylphosphine structure. Examples of the salt having a triphenylphosphine structure and a triphenylborane structure include tetraphenylphosphonium tetraphenylborate (trade name; TPP-K), tetraphenylphosphonium tetra-p-triborate (trade name; TPP-MK), benzyltriphenylphosphonium tetraphenylborate (trade name; TPP-ZK), and triphenylphosphine triphenylborane (trade name; TPP-S) (the above-described products are all manufactured by HOKKO CHEMICAL INDUSTRY CO., LTD.).

Examples of the amino group-containing compound include monoethanolaminetrifluoroborate (manufactured by STELLACHEMIFA CORPORATION), and dicyandiamide (manufactured by NACALAI TESQUE, INC.).

The thermosetting catalyst has a shape of, for example, spherical or ellipsoidal.

The thermosetting catalyst can be used singly, or can be used in combination of two or more.

The mixing ratio of the thermosetting catalyst relative to 100 parts by mass of the resin component is, for example, 0.2 parts by mass or more, preferably 0.3 parts by mass or more, and for example, 1 part by mass or less, preferably 0.6 parts by mass or less. When the mixing ratio of the thermosetting catalyst is the above-described upper limit or less, storage stability for a long period of time at room temperature of the soft magnetic thermosetting adhesive film can be made excellent. Meanwhile, when the mixing ratio of the thermosetting catalyst is the lower limit or more, the soft magnetic thermosetting adhesive film can be cured by heat at low temperature and for a short period of time, and reflow resistance of the soft magnetic film can be made excellent.

The soft magnetic thermosetting composition may contain an additive as necessary. Examples of the additive include commercially available or known additives such as a cross-linking agent and inorganic filler.

Examples of the cross-linking agent include polyisocyanate compounds such as tolylene diisocyanate, diphenylmethane diisocyanate, p-phenylenediisocyanate, 1,5-naphthalenediisocyanate, and an adduct of polyhydric alcohol and diisocyanate.

The cross-linking agent content relative to 100 parts by mass of the resin component is, for example, 0.05 parts by mass or more and 7 parts by mass or less. When the amount of the cross-linking agent is the above-described upper limit or less, excellent adhesive strength can be achieved. Meanwhile, when the amount of the cross-linking agent is the above-described lower limit or more, more excellent reflow resistance of the soft magnetic film can be achieved.

Furthermore, an inorganic filler can be suitably blended in the soft magnetic thermosetting composition in accordance with its use. Thermal conductivity and modulus of elasticity of the soft magnetic film can be improved in this manner.

Examples of the inorganic filler include ceramics such as silica, clay, gypsum, calcium carbonate, barium sulfate, alumina, beryllium oxide, silicon carbide, and silicon nitride; metals or alloys of aluminum, copper, silver, gold, nickel, chromium, lead, tin, zinc, palladium, and solder; and also carbon. Of these examples of the inorganic filler, preferably, silica, more preferably, molten silica is used.

The inorganic filler has an average particle size of, for example, 0.1 µm or more and 80 µm or less.

When the inorganic filler is blended, its mixing ratio relative to 100 parts by mass of the resin component is, for example, 80 parts by mass or less, preferably 70 parts by mass or less, and for example, more than 0 parts by mass.

These examples of the inorganic filler can be used singly, or can be used in combination of two or more.

Next, description is given below of a method for producing a soft magnetic thermosetting adhesive film of the present invention.

To produce the soft magnetic thermosetting adhesive film, a soft magnetic thermosetting composition solution, in which the above-described soft magnetic thermosetting composition is dissolved or dispersed in a solvent, is prepared.

Examples of the solvent include organic solvents such as ketones including acetone and methyl ethyl ketone (MEK); esters such as ethyl acetate; and amides such as N,N-dimethylformamide. Examples of the solvent also include water-based solvents such as water, and alcohols such as methanol, ethanol, propanol, and isopropanol.

The soft magnetic thermosetting composition solution has a solid content of, for example, 10 mass% or more, preferably 30 mass% or more, and for example, 90 mass% or less, preferably 70 mass% or less.

Then, the soft magnetic thermosetting composition solution is applied to a surface of a substrate (separator, core material, etc.) to give a predetermined thickness to form a coating, and then the coating is dried under predetermined conditions. A soft magnetic thermosetting adhesive film is produced in this manner.

The application method is not particularly limited, and for example, doctor blades, roll coating, screen coating, and gravure coating can be used.

Examples of drying conditions include a drying temperature of, for example, 70°C or more and 160°C or less, and drying time of, for example, 1 minute or more and 5 minutes or less.

The soft magnetic thermosetting adhesive film has an average film thickness of, for example, 5 µm or more, preferably 50 µm or more, and for example, 1000 µm or less, preferably 500 µm or less.

The produced soft magnetic thermosetting adhesive film contains the soft magnetic particles relative to 100 parts by volume of the soft magnetic thermosetting adhesive film of, for example, 30 parts by volume or more, preferably 40 parts by volume or more, more preferably 50 parts by volume or more, and for example, 80 parts by volume or less, preferably 70 parts by volume or less, more preferably 65 parts by volume or less. Excellent magnetic properties can be achieved in this manner.

The soft magnetic thermosetting adhesive film is in a semi-cured (B-stage state) state under room temperature (to be specific, at 25°C).

The soft magnetic thermosetting adhesive film preferably contains flat soft magnetic particles, and the flat soft magnetic particles are arranged in 2-dimensional in-plane direction of the soft magnetic thermosetting adhesive film. That is, the longitudinal direction (direction perpendicular to thickness direction) of the flat soft magnetic particles is oriented along the surface direction of the soft magnetic thermosetting adhesive film. In this manner, the soft magnetic thermosetting adhesive film is filled with the soft magnetic particles at a high proportion, and excellent magnetic properties are achieved.

The soft magnetic thermosetting adhesive film has an average thickness of, for example, 5 µm or more, preferably 50 µm or more, and for example, 500 µm or less, preferably 250 µm or less.

Examples of the separator include a polyethylene terephthalate (PET) film, polyethylene film, polypropylene film, and paper. The surfaces of these examples of the separator are treated for releasing with, for example, a fluorine release agent, a long-chain alkylacrylate release agent, and a silicone release agent.

Examples of the core material include a plastic film (e.g., polyimide film, polyester film, polyethylene terephthalate film, polyethylenenaphthalate film, polycarbonate film, etc.), a metal film (e.g., aluminum foil, etc.), and a resin substrate, a silicon substrate, and glass a substrate reinforced with, for example, glass fiber and plastic nonwoven fiber.

The separator or core material has an average thickness of, for example, 1 µm or more and 500 µm or less.

The soft magnetic thermosetting adhesive film of the present invention can be, for example, a single-layer structure of only a soft magnetic thermosetting adhesive film, a multi-layer structure in which a soft magnetic thermosetting adhesive film is laminated on one side or both sides of the core material, and a multi-layer structure in which a separator is laminated on one side or both sides of the soft magnetic thermosetting adhesive film.

A preferred embodiment of the present invention is a multi-layer structure in which a separator is laminated on one side or both sides of the magnetic thermosetting adhesive film. In this manner, the soft magnetic thermosetting adhesive sheet can be protected until practical use, and furthermore, can be used as a support substrate at the time of transferring the soft magnetic adhesive film to the circuit board.

Next, description is given below of an embodiment of a method (bonding method) for producing a soft magnetic film laminate circuit board with reference to FIG. 1.

In this method, first, as shown in FIG. 1A, a soft magnetic thermosetting adhesive film 2 on which a separator 1 is laminated, and a circuit board 5 in which a wire pattern 3 is formed on the surface of a substrate 4 are prepared; and then the soft magnetic thermosetting adhesive film 2 and the circuit board 5 are disposed to face each other in spaced-apart relation in the thickness direction.

The soft magnetic thermosetting adhesive film 2 can be produced as described above, and soft magnetic particles 6 are dispersed in the soft magnetic thermosetting composition (to be more specific, resin component 7). In the embodiment shown in FIG. 1A, flat soft magnetic particles 6 are used as the soft magnetic particles 6, and the flat soft magnetic particles 6 are oriented such that their longitudinal direction (direction perpendicular to thickness direction) is along the surface direction of the soft magnetic thermosetting adhesive film 2.

The circuit board 5 is, for example, a circuit board 5 used with electromagnetic induction method, and on one side of the substrate 4, a wire pattern 3 such as loop coil is formed. The wire pattern 3 is formed with, for example, a semi-additive method or subtractive method.

Examples of the insulating material that forms the substrate 4 include a glass epoxy substrate, a glass substrate, a PET substrate, a Teflon substrate, a ceramics substrate, and a polyimide substrate.

A wire 8 that forms the wire pattern 3 has a width of, for example, 5 µm or more, preferably 9 µm or more, and for example, 500 µm or less, preferably 300 µm or less.

The wire 8 has a thickness (height) of, for example, 5 µm or more, preferably 10 µm or more, and for example, 50 µm or less, preferably 35 µm or less.

Gaps 9 (pitches, length of X shown in FIG. 1A) between the wires 8 are, for example, 50 µm or more, preferably 80 µm or more, and for example, 3 mm or less, preferably 2 mm or less. The soft magnetic thermosetting adhesive film 2 can exhibit suitable embedment properties particularly for the gaps 9 in the above-described range.

Then, as shown in FIG. 1B, the soft magnetic thermosetting adhesive film 2 is brought into contact with the upper face of the wires 8.

Thereafter, as shown in FIG. 1C, the soft magnetic thermosetting adhesive film 2 is pressed against the wires 8. In this manner, the soft magnetic thermosetting composition forming the soft magnetic thermosetting adhesive film 2 flows and the wire pattern 3 is embedded in the soft magnetic thermosetting composition. That is, the front face and the side face of the wires 8 that form the wire pattern 3 are covered with the soft magnetic thermosetting composition. Together with the coverage of the front face and the side face of the wires 8, the front face of the substrate 4 exposed from the wire pattern 3 is covered with the soft magnetic thermosetting composition.

The pressure is, for example, 10MPa or more, preferably 20MPa or more, and for example, 100MPa or less, preferably 50MPa or less.

Then, as shown in FIG. 1D, the soft magnetic thermosetting adhesive film 2 is heated. In this manner, a soft magnetic film laminate circuit board 11 in which the soft magnetic film 10 is laminated on the circuit board 5 is produced.

The heating temperature is, for example, 80°C or more, preferably 100°C or more, and for example, 200°C or less, preferably 175°C or less, more preferably 140°C or less.

The heating time is, for example, 0.1 hours or more, preferably, 0.2 hours or more, and for example, 24 hours or less, preferably 3 hours or less, more preferably 2 hours or less.

The thus produced soft magnetic film laminate circuit board 11 includes a circuit board 5 formed with the wire pattern 3, and a soft magnetic film 10 on which the circuit board 5 is laminated.

The soft magnetic film 10 is formed from the soft magnetic particles 6, a cured resin component 7a which is cured resin component 7 by heat, and a thermosetting catalyst (not shown), and is in a cured state (C-stage state).

In the soft magnetic film laminate circuit board 11, the wire pattern 3 is embedded in the soft magnetic film 10. That is, the front face and the side face of the wires 8 that form the wire pattern 3 are covered with the soft magnetic film 10. Together with the coverage of the front face and the side face of the wires 8, the front face of the substrate 4 exposed from the wire pattern 3 is covered with the soft magnetic film 10.

Between the separator 1 and the wire 8 or the substrate 4, and in the gaps 9 between the wires 8, the soft magnetic particles 6, cured resin component 7a, and a thermosetting catalyst are present, and the soft magnetic particles 6 are oriented so that its longitudinal direction (direction perpendicular to the thickness direction) is along the surface direction of the soft magnetic film 10.

In the above-described method, the soft magnetic thermosetting adhesive film 2 is pressed against the wire 8, and then the soft magnetic thermosetting adhesive film 2 is heated. However, the pressing and heating can be performed simultaneously.

In the embodiment of FIG. 1, the circuit board 5 having the wire pattern 3 formed on only one side is used. However, the circuit board 5 having wire patterns 3 on both on one side and the other side can also be used. In such a case, the soft magnetic thermosetting adhesive film 2 can be laminated also on the other side as well as the one side.

In the embodiment of FIG. 1, only one (one layer) of the soft magnetic thermosetting adhesive film 2 is bonded onto the circuit board. However, the soft magnetic thermosetting adhesive film 2 can be bonded in a plural (a plurality of layers) number to produce the soft magnetic film 10 having a desired thickness.

A position detection device of the present invention includes, for example, a sensor board having the above-described soft magnetic film laminate circuit board 11 and a sensor portion mounted on the soft magnetic film laminate circuit board, and a position detection flat plate disposed above and to face the sensor board.

Examples of the reflowing process at the time of mounting the sensor portion on the soft magnetic film laminate circuit board 11 includes, for example, hot air reflowing and infrared reflowing. The heating can be either entirely or partially.

The heating temperature in the reflowing step is, for example, 200°C or more, preferably 240°C or more, and for example, 300°C or less, preferably 265°C or less. The heating time is, for example, 1 second or more, preferably 5 seconds or more, more preferably 30 seconds or more, and for example, 2 minutes or less, preferably 1.5 minutes or less.

The position detection device is produced by disposing the position detection flat plate to face the above-described sensor board in spaced-apart relation.

Then, the soft magnetic thermosetting adhesive film 2 is formed from a soft magnetic thermosetting composition containing soft magnetic particles 6, acrylic resin, epoxy resin, phenol resin, and a thermosetting catalyst, and a total of the epoxy resin content and the phenol resin content is 20 parts by mass or more and 99 parts by mass or less relative to 100 parts by mass of the soft magnetic particles-excluding component excluding the soft magnetic particles 6 from the soft magnetic thermosetting composition.

Thus, the soft magnetic particles 6 and the resin component 7 can be reliably embedded in the gaps 9 between the wires 8 when heating the soft magnetic thermosetting adhesive film 2 and laminating on the circuit board 5.

The soft magnetic film laminate circuit board 11 is produced by laminating the soft magnetic thermosetting adhesive film 2 on the circuit board 5, and curing the soft magnetic thermosetting adhesive film 2 by heat.

Thus, the soft magnetic particles 6 are embedded in the gaps 9 between the wires 8, and the cured resin component is allowed to adhere to the substrate 3 and the wire 8 strongly. Therefore, reflow resistance is excellent, and the soft magnetic film 10 is not easily separated from the circuit board 5 even if treated under high temperature, and generation of unevenness on the surface of the soft magnetic film 10 can be suppressed.

Furthermore, the position detection device includes a soft magnetic film laminate circuit board 11. Thus, the soft magnetic film 10 and the circuit board 5 are reliably adhered to each other. Therefore, magnetic properties are excellent, and reliable position detection can be made possible.

### Examples

While in the following, the present invention is described in further detail with reference to Examples and Comparative Examples, the present invention is not limited to any of them by no means. The numeral values in Examples shown below can be replaced with the numeral values shown in the above-described embodiments (that is, the upper limit or the lower limit value).

### Example 1

A soft magnetic thermosetting composition was produced by mixing 500 parts by mass of soft magnetic particles (Fe-Si-Al alloy, flat, manufactured by Mate Co., Ltd.), 72 parts by mass of an acrylate ester polymer mainly composed of ethyl acrylate-methyl methacrylate (manufactured by Negami Chemical Industirial Co., Ltd., trade name "Paracron W-197CM"), 9 parts by mass of bisphenol A epoxy resin (manufactured by JER, Epikote 1004), 5 parts by mass of bisphenol A epoxy resin (manufactured by JER, Epikote YL980), 7 parts by mass of phenol aralkyl resin (manufactured by Mitsui Chemicals, Inc., Milex XLC-4L), and 0.45 parts by mass of tetraphenylphosphonium thiocyanate (thermosetting catalyst, manufactured by HOKKO CHEMICAL INDUSTRY CO., LTD., trade name; TPP-SCN) so that the soft magnetic particles was 45% by volume.

The soft magnetic thermosetting composition was dissolved in methyl ethyl ketone, thereby producing a soft magnetic thermosetting composition solution having a solid content concentration of 51 mass%.

The soft magnetic thermosetting composition solution was applied on a separator 1 (average thickness 50 µm) composed of a polyethylene terephthalate film treated with silicone for release, and thereafter, dried at 130°C for 2 minutes.

In this manner, a soft magnetic thermosetting adhesive film 2 (average thickness of only soft magnetic thermosetting adhesive film 2 was 80 µm) on which a separator 1 was laminated was produced. The soft magnetic thermosetting adhesive film 2 was in a semi-cured state.

### Examples 2 to 5

Soft magnetic thermosetting compositions were produced based on the materials and the mixing ratios shown in Table 1. Soft magnetic thermosetting adhesive films 2 of Examples 2 to 5 were produced in the same manner as in Example 1, except that these soft magnetic thermosetting compositions were used.

### Comparative Examples 1 to 4

Soft magnetic thermosetting compositions were produced based on the materials and the mixing ratios shown in Table 1. Soft magnetic thermosetting adhesive films 2 of Comparative Examples 1 to 4 were produced in the same manner as in Example 1, except that these soft magnetic thermosetting compositions were used. In Comparative Example 4, application on the separator was difficult, and therefore a sheet could not be formed.

### Evaluation

### • Embedment properties

The soft magnetic thermosetting adhesive films 2 of Examples and Comparative Examples were laminated on circuit boards 5 (wire 8 width 100 µm, wire 8 height 15 µm, gap 6 interval (pitch) 200 µm) having a loop coil wire pattern 3 on one side of the substrate 4, and were heated at 175°C for 30 minutes, thereby curing the soft magnetic thermosetting adhesive film 2 by heat, and producing soft magnetic film laminate circuit boards 11.

The soft magnetic film laminate circuit boards 11 were cut in the thickness direction, and observed by SEM with a magnification of 500×. Those with the soft magnetic particles 6 and the cured resin component 7a completely embedded in the gaps between the wires 8 were evaluated as Excellent, those with the soft magnetic particles 6 and the cured resin component 7a mostly embedded in the gaps between the wires 8 were evaluated as Good, and those with only the cured resin component 7a embedded in the gaps between the wires 8 but not the soft magnetic particles 6 were evaluated as Bad.

The results are shown in Table 1.

### • Reflow resistance

The soft magnetic film laminate circuit boards 11 subjected to the above-described embedment properties test were allowed to pass through an IR reflow oven with its temperature set so that it kept a temperature of 260°C or more for 10 seconds, thereby producing reflow treated substrate.

The interface between the soft magnetic film 10 and the circuit board 5 of the reflow treated substrate was observed. Those with occurrence of separation at the interface, or occurrence of unevenness at the surface of the soft magnetic film 10 were evaluated as Bad, and those with no occurrence of separation or unevenness were evaluated as Good.

The results are shown in Table 1.

### • Film-forming properties

At the time of producing the soft magnetic thermosetting adhesive film 2 of Examples and Comparative Examples, coating stability when the soft magnetic thermosetting composition solution was applied on the separator, and the surface of the produced soft magnetic thermosetting adhesive film 2 were observed.

Those soft magnetic thermosetting composition solutions stably applied on the separator and no roughness was occurred on the surface of the produced soft magnetic thermosetting adhesive film 2 were evaluated as Excellent; those soft magnetic thermosetting composition solutions stably applied but roughness was confirmed on the surface of the soft magnetic thermosetting adhesive film 2 were evaluated as Good; and those soft magnetic thermosetting composition solutions that could not stably applied were evaluated as Bad.

The results are shown in Table 1.

### • Magnetic properties

A soft magnetic film 10 was produced by heat-pressing the soft magnetic thermosetting adhesive films 2 of Examples and Comparative Examples at 175°C for 30 minutes. Magnetic permeability of the produced soft magnetic film 10 was measured by one turn method using an impedance analyzer.

Those with a magnetic permeability µ' of 100 or more at a frequency of 1MHz was evaluated as Good, and those with a magnetic permeability µ' of less than 100 at a frequency of 1MHz was evaluated as Bad.

The results are shown in Table 1.

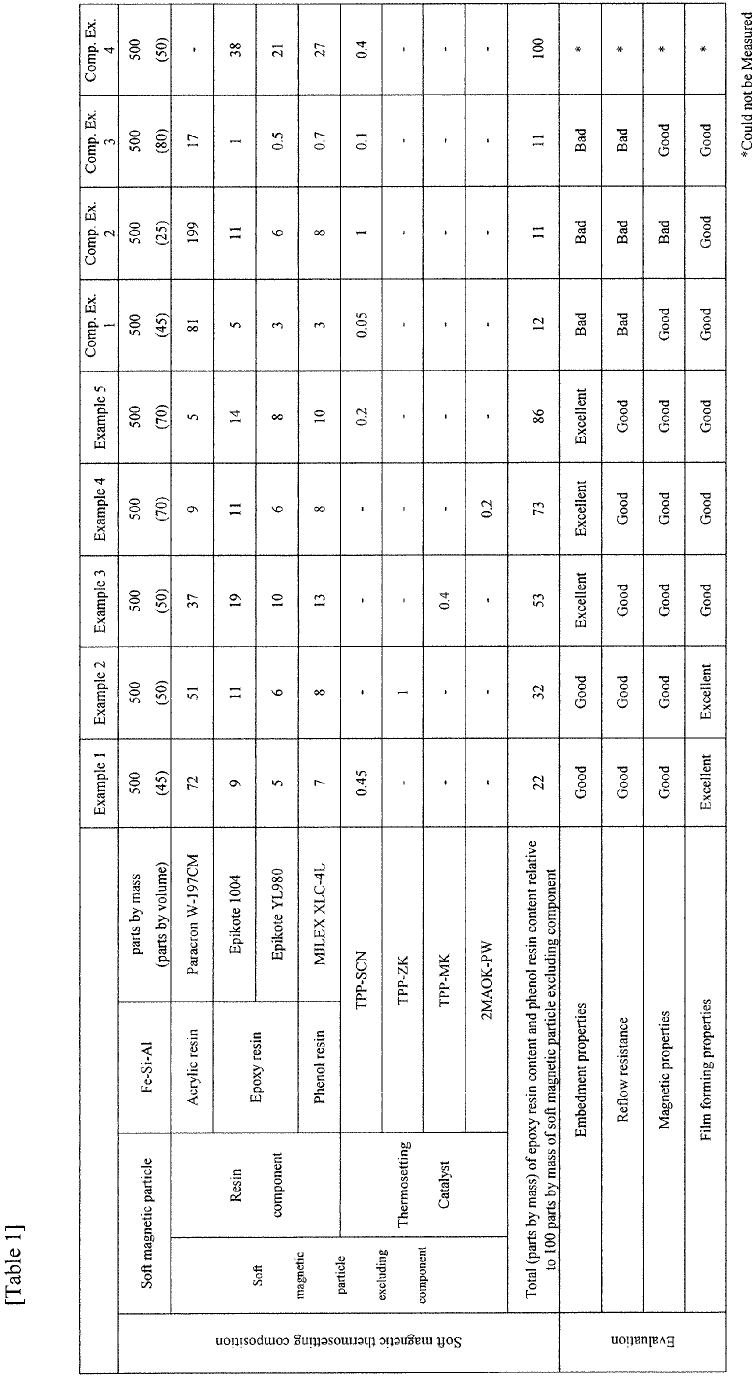

The numeral values for the components in Table represent parts by mass unless otherwise noted.

Details of the components shown in Table are shown below.
- Fe-Si-Al alloy: trade name "SP-7", soft magnetic particles, average particle size 65 µm, flat, manufactured by Mate Co., Ltd.
- Paracron W-197CM: trade name, acrylate ester polymer mainly composed of ethyl acrylate-methyl methacrylate, manufactured by Negami Chemical Industirial Co., Ltd.
- Epikote 1004: trade name, bisphenol A epoxy resin, epoxy equivalent 875 to 975g/eq, manufactured by JER
- Epikote YL980: trade name, bisphenol A epoxy resin, epoxy equivalent 180 to 190g/eq, manufactured by JER
- MILEX XLC-4L: trade name, phenolaralkyl resin, hydroxyl equivalent 170g/eq, manufactured by Mitsui Chemicals
- TPP-SCN: trade name, tetraphenylphosphonium thiocyanate, manufactured by HOKKO CHEMICAL INDUSTRY CO., LTD.
- TPP-ZK: trade name, benzyltriphenylphosphonium tetraphenylborate, manufactured by HOKKO CHEMICAL INDUSTRY CO., LTD.
- TPP-MK: trade name, tetraphenylphosphonium tetra-p-triborate, manufactured by HOKKO CHEMICAL INDUSTRY CO., LTD.
- 2MAOK-PW: trade name, 2,4-diamino-6-[2'-methylimidazolyl-(1')]-ethyl-s-triazine isocyanuric acid adduct, manufactured by Shikoku Chemicals Corporation.

While the illustrative embodiments of the present invention are provided in the above description, such is for illustrative purpose only and it is not to be construed as limiting in any manner. Modification and variation of the present invention that will be obvious to those skilled in the art is to be covered by the following claims.

### Industrial Applicability

The soft magnetic thermosetting adhesive film, soft magnetic film laminate circuit board, and position detection device of the present invention can be applied in various industrial products. For example, the soft magnetic thermosetting adhesive film and soft magnetic film laminate circuit board of the present invention can be used for a position detection device, and the position detection device of the present invention can be used for input devices for computers such as digitizers.

## Claims

1. A soft magnetic thermosetting adhesive film formed from a soft magnetic thermosetting composition comprising soft magnetic particles, acrylic resin, epoxy resin, phenol resin, and a thermosetting catalyst,
wherein a total of the epoxy resin content and the phenol resin content is 20 parts by mass or more and 99 parts by mass or less relative to 100 parts by mass of the component consisting of resin component, thermosetting catalyst, and optional additive but not including soft magnetic particles and solvent,
the phenol resin is at least one kind selected from the group of novolak-type phenol resin, resole-type phenol resin and polyoxystyrene, and
the phenol resin is a curing agent for the epoxy resin.

2. The soft magnetic thermosetting adhesive film according to Claim 1, wherein the soft magnetic thermosetting adhesive film is in a semi-cured state.

3. The soft magnetic thermosetting adhesive film according to Claim 1, wherein 30 parts by volume or more and 70 parts by volume or less of the soft magnetic particles is contained relative to 100 parts by volume of the soft magnetic thermosetting adhesive film.

4. The soft magnetic thermosetting adhesive film according to Claim 1, wherein 0.2 parts by mass or more and 1 part by mass or less of the thermosetting catalyst is contained relative to 100 parts by mass of a resin component consisting of the acrylic resin, the epoxy resin, and the phenol resin.

5. A soft magnetic film laminate circuit board produced by laminating a soft magnetic thermosetting adhesive film on a circuit board, and curing the soft magnetic thermosetting adhesive film by heat, wherein
the soft magnetic thermosetting adhesive film is formed from a soft magnetic thermosetting composition comprising soft magnetic particles, acrylic resin, epoxy resin, phenol resin, and a thermosetting catalyst,
a total of the epoxy resin content and the phenol resin content is 20 parts by mass or more and 99 parts by mass or less relative to 100 parts by mass of the component consisting of resin component, thermosetting catalyst, and optional additive but not including soft magnetic particles and solvent, and wherein the phenol resin is at least one kind selected from the group of novolak-type phenol resin, resole-type phenol resin and polyoxystyrene, and
the phenol resin is a curing agent for the epoxy resin.

6. A position detection device comprising the soft magnetic film laminate circuit board according to Claim 5.

## Patentansprüche

1. Weichmagnetische wärmehärtende Haftfolie, die aus einer weichmagnetischen wärmehärtenden Zusammensetzung gebildet ist, die weichmagnetische Teilchen, Acrylharz, Epoxidharz, Phenolharz und einen Wärmehärtungskatalysator umfasst,
wobei der Gesamtgehalt an Epoxidharz und Phenolharz 20 Massenteile oder mehr und 99 Massenteile oder weniger beträgt, bezogen auf 100 Massenteile der Komponente, die aus der Harzkomponente, dem Wärmehärtungskatalysator und einem optionalen Additiv besteht, aber keine weichmagnetischen Teilchen und kein Lösungsmittel enthält,
das Phenolharz mindestens eine Art ist, die aus der Gruppe von Phenolharz vom Novolak-Typ, Phenolharz vom Resol-Typ und Polyoxystyrol ausgewählt ist, und
das Phenolharz ein Härtungsmittel für das Epoxidharz ist.

2. Weichmagnetische wärmehärtende Haftfolie gemäß Anspruch 1, wobei die weichmagnetische wärmehärtende Haftfolie in einem halbgehärteten Zustand vorliegt.

3. Weichmagnetische wärmehärtende Haftfolie gemäß Anspruch 1, wobei 30 Volumenteile oder mehr und 70 Volumenteile oder weniger der weichmagnetischen Teilchen enthalten sind, bezogen auf 100 Volumenteile der weichmagnetischen wärmehärtenden Haftfolie.

4. Weichmagnetische wärmehärtende Haftfolie gemäß Anspruch 1, wobei 0,2 Massenteile oder mehr und 1 Massenteil oder weniger des Wärmehärtungskatalysators enthalten sind, bezogen auf 100 Massenteile einer Harzkomponente, die aus dem Acrylharz, dem Epoxidharz und dem Phenolharz besteht.

5. Weichmagnetische folienlaminierte Leiterplatte, hergestellt durch Laminieren einer weichmagnetischen wärmehärtenden Haftfolie auf eine Leiterplatte und Härten der weichmagnetischen wärmehärtenden Haftfolie mittels Wärme, wobei
die weichmagnetische wärmehärtende Haftfolie aus einer weichmagnetischen wärmehärtenden Zusammensetzung gebildet ist, die weichmagnetische Teilchen, Acrylharz, Epoxidharz, Phenolharz und einen Wärmehärtungskatalysator umfasst,
der Gesamtgehalt an Epoxidharz und Phenolharz 20 Massenteile oder mehr und 99 Massenteile oder weniger beträgt, bezogen auf 100 Massenteile der Komponente, die aus der Harzkomponente, dem Wärmehärtungskatalysator und einem optionalen Additiv besteht, aber keine weichmagnetischen Teilchen und kein Lösungsmittel enthält, und wobei das Phenolharz mindestens eine Art ist, die aus der Gruppe von Phenolharz vom Novolak-Typ, Phenolharz vom Resol-Typ und Polyoxystyrol ausgewählt ist, und
das Phenolharz ein Härtungsmittel für das Epoxidharz ist.

6. Positionserkennungsvorrichtung, umfassend die weichmagnetische folienlaminierte Leiterplatte gemäß Anspruch 5.

## Revendications

1. Film adhésif thermodurcissable magnétique doux formé à partir d'une composition thermodurcissable magnétique douce comprenant des particules magnétiques douces, de la résine acrylique, de la résine époxy, de la résine phénolique et un catalyseur thermodurcissable,
dans lequel un total de la teneur en résine époxy et de la teneur en résine phénolique est de 20 parties en masse ou plus et 99 parties en masse ou moins par rapport à 100 parties en masse du composant consistant en un composant de résine, un catalyseur thermodurcissable et un additif facultatif, mais sans inclure de particules magnétiques douces et de solvant,
la résine phénolique est au moins d'un type sélectionné à partir du groupe consistant en de la résine phénolique de type novolaque, de la résine phénolique de type résol et du polyoxystyrène, et
la résine phénolique est un agent de durcissement pour la résine époxy.

2. Film adhésif thermodurcissable magnétique doux selon la revendication 1, dans lequel le film adhésif thermodurcissable magnétique doux est dans un état semi-durci.

3. Film adhésif thermodurcissable magnétique doux selon la revendication 1, dans lequel 30 parties en volume ou plus et 70 parties en volume ou moins des particules magnétiques douces sont contenues par rapport à 100 parties en volume du film adhésif thermodurcissable magnétique doux.

4. Film adhésif thermodurcissable magnétique doux selon la revendication 1, dans lequel 0,2 partie en masse ou plus et 1 partie en masse ou moins du catalyseur thermodurcissable est contenue par rapport à 100 parties en masse d'un composant de résine consistant en de la résine acrylique, de la résine époxy et de la résine phénolique.

5. Carte de circuit stratifiée à film magnétique doux produite par stratification d'un film adhésif thermodurcissable magnétique doux sur une carte de circuit, et durcissement du film adhésif thermodurcissable magnétique doux par chaleur, dans laquelle
le film adhésif thermodurcissable magnétique doux est formé à partir d'une composition thermodurcissable magnétique douce comprenant des particules magnétiques douces, de la résine acrylique, de la résine époxy, de la résine phénolique et un catalyseur thermodurcissable,
un total de la teneur en résine époxy et de la teneur en résine phénolique est de 20 parties en masse ou plus et 99 parties en masse ou moins par rapport à 100 parties en masse du composant consistant en un composant de résine, un catalyseur thermodurcissable et un additif facultatif, mais sans inclure de particules magnétiques douces et de solvant, et dans laquelle la résine phénolique est au moins d'un type sélectionné à partir du groupe consistant en de la résine phénolique de type novolaque, de la résine phénolique de type résol et du polyoxystyrène, et
la résine phénolique est un agent de durcissement pour la résine époxy.

6. Dispositif de détection de position comprenant la carte de circuit stratifiée à film magnétique doux selon la revendication 5.
